# FASCICULE DE BREVET EUROPEEN

(11) **EP 0 770 788 B1**
(45) Date de publication et mention de la délivrance du brevet: **13.06.2001**
(21) Numéro de dépôt: 96116430.8
(22) Date de dépôt: 14.10.1996
(51) Int. Cl.: F16D 13/58, F16D 13/70, F16D 13/71

(54) **Module d'embrayage comportant des moyens perfectionnés de fixation de son couvercle sur le plateau de réaction**
Kupplungseinheit mit verbesserten Befestigungsmitteln zur Montage des Deckels auf dem Schwungrad
Clutch unit comprising improved fastening means for mounting the cover to the flywheel

(30) Priorité: 24.10.1995 FR 9512523; 20.12.1995 FR 9515138
(43) Date de publication de la demande: 02.05.1997
(73) Titulaire: VALEO, 75017 Paris (FR)
(72) Inventeur: Giroire, Jean-Pierre, 78100 Saint-Germain-en-Laye (FR); Viola, Paolo, 75007 Paris (FR); Graton, Michel, 75020 Paris (FR); Lemaire, Alain, 80090 Amiens (FR)
(74) Mandataire: Gamonal, Didier

(56) Documents cités:
- EP-A- 0 385 752
- DE-A- 3 802 955
- DE-A- 4 220 888
- DE-A- 4 309 570
- FR-A- 2 526 105
- FR-A- 2 712 361
- GB-A- 2 248 476
- GB-A- 2 291 144

## Description

La présente invention concerne un module d'embrayage, notamment pour véhicule automobile.

L'invention concerne plus particulièrement un module d'embrayage du type comportant un ensemble de pièces adjacentes de forme générale annulaire et coaxiales parmi lesquelles sont agencés successivement axialement un couvercle, un diaphragme, un plateau de pression lié en rotation au couvercle par des moyens d'attelage permettant un déplacement axial du plateau de pression par rapport au couvercle, un disque de friction propre à être relié à un arbre mené, tel que par exemple l'arbre d'une boîte de vitesses, et un plateau de réaction fixé au couvercle par des moyens de fixation agencés à la périphérie externe du module, du type dans lequel le disque de friction comporte au moins une garniture annulaire périphérique de friction interposée entre des faces radiales en vis-à-vis de friction des plateaux de pression et de réaction, dans lequel le diaphragme prend appui contre le couvercle et le plateau de pression pour solliciter axialement ce dernier dans le sens correspondant au serrage de la garniture de friction, et du type dans lequel le plateau de réaction est monté sur un flasque de support solidaire en rotation d'un arbre menant, tel que le vilebrequin d'un moteur à combustion interne, au moyen d'une série d'organes de fixation agencés radialement vers l'intérieur par rapport aux moyens de fixation du plateau de réaction sur le couvercle.

Un exemple d'un tel type de module d'embrayage est décrit et représenté à la figure 6 du document FR-A-2.546.594. Dans ce document, les moyens de fixation du couvercle sur le plateau de réaction, afin de réaliser l'ensemble de manière unitaire sous forme d'un module d'embrayage, sont constitués par la jupe annulaire d'orientation axiale, ou paroi latérale, s'étendant à la périphérie externe du couvercle, dont l'extrémité libre est sertie radialement vers l'intérieur, autour d'une nervure ou bourrelet périphérique externe du plateau de pression.

Cette solution donne satisfaction néanmoins pour un encombrement radial donné le disque de friction ne peut avoir la taille maximale car le plateau de réaction est à l'image du plateau de pression et comporte des pattes à sa périphérie externe pour liaison en rotation au plateau de pression à l'aide de languettes élastiques fixées chacune à l'une de leur extrémité à la patte du plateau de réaction à leur autre extrémité à la patte du plateau de pression. La présence des languettes empêche donc d'augmenter radialement la taille du disque de friction.

En outre le blocage en rotation du couvercle ne se fait pas de manière positive comme à l'aide de vis de fixation.

D'autres moyens de fixation plus complexes sont proposés dans ce document, par exemple à la figure 2, sur laquelle il est proposé de faire appel à des vis de fixation pour assurer simultanément la fixation du couvercle sur le plateau de réaction et la fixation de ce dernier sur le flasque de support. Dans ce sas c'est la présence des têtes des vis qui empêche d'augmenter radialement la taille du disque de friction.

Dans le document DE-A-43 09 570, conforme au préambule de la revendication 1, il est prévu une disposition dans laquelle le couvercle présente des pattes de fixation engagées chacune dans une rainure axiale et fixées à l'aide de vis sur le plateau de réaction.

Cela impose de réaliser des filetages au niveau des rainures.

En outre les êtes des vis sont implantées au niveau de la denture de la couronne de démarreur ce qui peut être une gêne.

La présente invention a pour but de proposer un module d'embrayage du type mentionné précédemment qui comporte des moyens de fixation du couvercle sur l'ensemble flasque de support - plateau de réaction qui remédie aux inconvénients qui viennent d'être évoqués.

Conformément à l'invention ce problème est résolu par la partie caractérisante de la revendication 1.

Grâce à l'invention le plateau de réaction est simplifié puisque par rapport aux solutions décrites dans le document FR-A-2 546 594 il est dépourvu de pattes de fixation, les moyens d'attelage intervenant dans la présente invention directement entre le couvercle et le plateau de pression.

Cela permet donc pour un encombrement radial donné d'augmenter la taille de ou des garnitures de friction du disque de friction et/ou de l'amortisseur que comporte usuellement ledit disque dans sa partie centrale. En outre on obtient un blocage en rotation de manière positive du couvercle par rapport au flasque de support ou plateau de réaction rapporté sur son flasque de support.

D'une manière générale les moyens de fixation ont un encombrement radial réduit. Ils sont décalés axialement par rapport au disque de friction qui peut ainsi venir au plus près de la périphérie externe du couvercle comportant les pattes de fixation.

Dans une forme de réalisation les pattes de fixation traversent chacune axialement un passage d'orientation axiale formé à la périphérie externe du plateau de réaction, le tronçon d'extrémité libre de la patte de fixation étant retenu axialement par rapport au plateau de réaction.

Dans ce cas la face axiale d'extrémité, selon l'invention, est constituée par la face radiale du plateau de réaction opposée à la surface radiale de friction dudit plateau.

Ainsi grâce à l'invention on peut fixer le plateau de réaction sur son flasque de support à l'aide de vis logées dans le plateau de réaction, des perçages étant réalisés, en coïncidence axiale, dans le couvercle, le diaphragme, le plateau de pression et le disque de friction pour accès aux têtes des vis.

En variante on peut réaliser les passages dans le flasque de support, le tronçon d'extrémité libre de la patte de fixation étant retenu axialement par rapport au flasque de support.

Dans tous les cas on peut régler la charge qu'exerce le diaphragme et/ou son inclinaison ou sa position, en faisant pénétrer les pattes plus ou moins dans leur passage associé.

On obtient ainsi un montage aisé de manière télescopique du couvercle.

En outre le couvercle a une forme simple puisqu'il est dépourvu de rebord radial de fixation comme à la figure 2 du document FR-A-2 546 594.

Avantageusement les pattes de fixation sont issues d'une jupe cylindrique annulaire d'orientation axiale que présente le couvercle à sa périphérie externe. Cette jupe a ainsi une forme de peigne circonférentiel, les pattes constituant l'extrémité libre de la jupe.

Grâce aux passages et aux pattes on peut indexer le couvercle. Pour formation d'un détrompeur par exemple au moins une patte et un passage peuvent être de taille différente. En variante cette patte et ce passage ne sont pas répartis de manière régulière.

Selon d'autres caractéristiques de l'invention dans une première forme de réalisation :
- le tronçon d'extrémité libre est soudé au plateau de réaction ce qui permet de monter de manière télescopique les pattes dans les passages et après réglage de la position du diaphragme de souder le tronçon d'extrémité libre ;
- le tronçon d'extrémité libre est rabattu radialement, par exemple vers l'intérieur ;
- la couronne de démarreur est montée sur une portée usinée dans la surface périphérique externe du plateau de réaction dont la profondeur radiale est inférieure à celle de la rainure axiale ;
- le tronçon d'extrémité libre est soudé à la couronne de démarreur ;
- le tronçon d'extrémité libre est rabattu radialement vers l'extérieur en regard d'une portion en vis-à-vis de la couronne de démarreur.

Dans une autre forme de réalisation selon l'invention le tronçon d'extrémité libre de la patte de fixation qui fait saillie est retenu axialement par rapport au flasque de support et au plateau de réaction, la couronne de démarreur étant solidarisée par soudage au flasque de support en étant montée sur la surface périphérique externe dudit flasque de support.

Grâce à cette disposition, on réalise de manière simple et bon marché la fixation de la couronne de démarreur, sans avoir à fixer celle-ci par frettage sur le plateau de réaction qui est une fixation onéreuse et réalisée à chaud.

Selon d'autres caractéristiques de ce mode de réalisation l'extrémité libre des pattes est soudée au flasque de support, ce qui permet de monter de manière télescopique les pattes dans les passages et, après réglage de la position du diaphragme, de souder le tronçon d'extrémité libre qui en variante peut être rabattu radialement vers l'intérieur ou radialement vers l'extérieur en regard d'une portion en vis-à-vis de la couronne de démarreur.

En variante le tronçon d'extrémité libre des pattes est serti ou est soudé avantageusement à la couronne de démarreur.

Bien entendu les pattes peuvent traverser des passages alignés réalisés dans le plateau de réaction et le flasque de support. Ces pattes peuvent être liées en rotation de manière positive au plateau de réaction grâce aux passages de celui-ci et traverser à jeu circonférentiel les passages du flasque de support en étant retenues axialement par ledit flasque de support comportant la couronne de démarreur.

Grâce à ce mode de réalisation les passages sont aisés à réaliser dans le flasque de support et le plateau de réaction a une forme simple.

Dans tous les cas une bonne ventilation de l'embrayage est obtenue.

D'autres caractéristiques et avantages de l'invention apparaîtront à la lecture de la description détaillée qui suit pour la compréhension de laquelle on se reportera aux dessins annexés dans lesquels :
- la figure 1 est une vue en section axiale d'un module d'embrayage réalisé conformément aux enseignements de la présente invention ;
- la figure 2 est une vue à plus grande échelle de la partie supérieure de la figure 1 ; et
- la figure 3 est une vue similaire à celle de la figure 2 qui illustre certains de ces composants en position non assemblée ;
- la figure 4 est une vue en section axiale d'un module d'embrayage selon l'invention pour un second mode de réalisation ;
- la figure 5 est une vue à plus grande échelle de la partie inférieure de la figure 4 ;
- la figure 6 est une vue partielle en coupe selon la ligne 6-6 de la figure 5 ;
- la figure 7 est une vue partielle selon la flèche 5 de la figure 5 ;
- la figure 8 est une vue analogue à la figure 5 et concerne une variante ;
- la figure 9 est une vue partielle selon la flèche 8 de la figure 8 ;
- la figure 10 est une vue partielle selon la ligne 10-10 de la figure 9 ;
- la figure 11 est une vue partielle des figures 5 et 8 montrant une variante de solidarisation du plateau de réaction et du flasque de support.

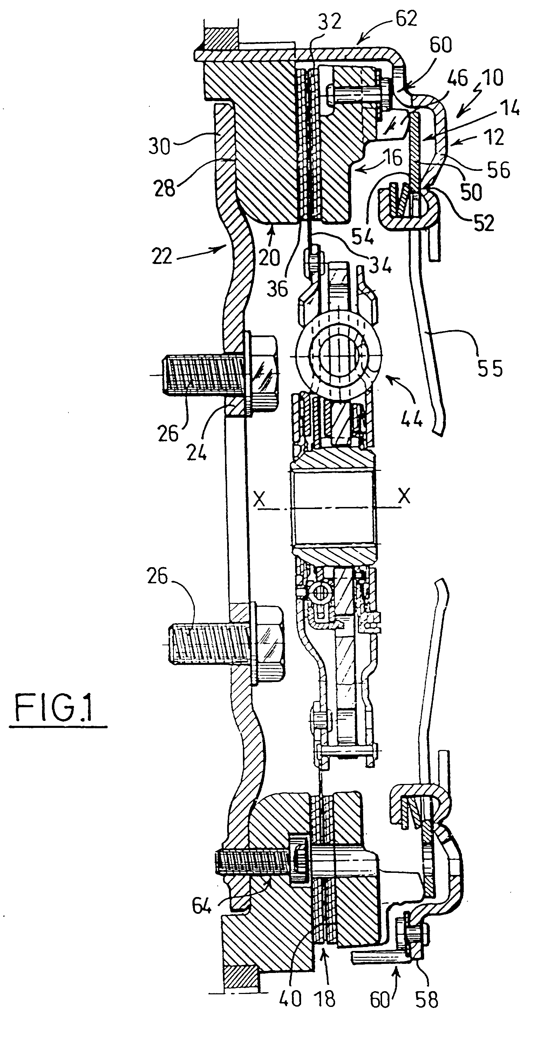

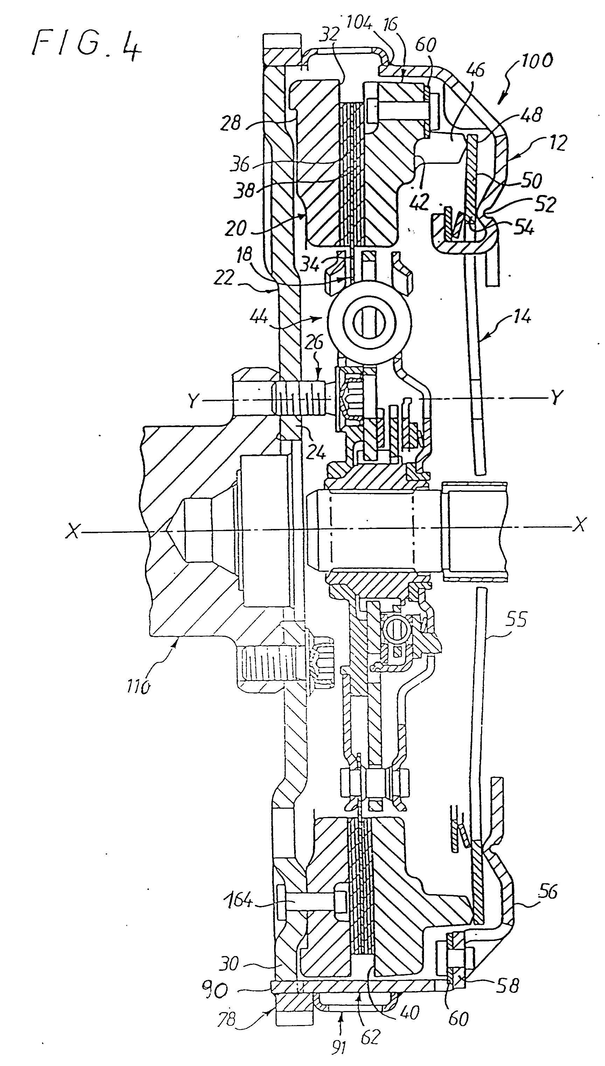

On a représenté sur les figures 1 et 4 un module d'embrayage pour véhicule automobile.

Le module 100 comporte de manière unitaire un ensemble de pièces adjacentes de forme générale annulaire et coaxiales selon l'axe X-X du module d'embrayage. Parmi ces pièces annulaires on distingue, successivement axialement, un couvercle 12, un diaphragme 14, un plateau de pression 16, un disque de friction 18 et un plateau de réaction 20.

Le plateau de réaction 20 est destiné à être calé en rotation sur le vilebrequin (représenté en 110 à la figure 4) d'un moteur à combustion interne de véhicule automobile en étant fixé à celui-ci par l'intermédiaire d'un flasque de support 22 en forme de disque annulaire dont la partie centrale 24 est fixée au vilebrequin par des vis 26.

Le plateau de réaction 20 est une pièce de forme annulaire en fonte délimitée axialement par une première face radiale 28 d'orientation générale transversale contre laquelle prend appui la couronne annulaire périphérique 30 du flasque de support 22, ici métallique, et par une face radiale opposée 32 qui est une face usinée constituant l'une des faces de friction pour le disque de friction 18.

Le disque de friction, selon un exemple de réalisation connu, est constitué ici pour l'essentiel par un disque de support de forme générale annulaire 34 qui porte sur chacune de ses faces opposées une garniture de friction annulaire continue.

Une première garniture 36 est prévue pour coopérer avec la face radiale de friction 32 du plateau de réaction 20 tandis que la garniture de friction opposée 38 est prévue pour coopérer avec une face radiale de friction 40 qui constitue l'une des deux faces transversales délimitant le plateau de réaction 16 qui est une pièce de forme générale annulaire en fonte délimitée axialement, à l'opposé de la face de friction 40, par une face d'orientation générale transversale 42.

Selon une conception connue, le disque 34 de support des garnitures de friction 36 et 38 est prévu pour être relié par l'intermédiaire d'un moyeu central (non référencé) cannelé intérieurement à un arbre mené (représenté à la figure 4) tel que par exemple l'arbre d'entrée de la boîte de vitesses équipant le véhicule automobile, avec interposition d'un amortisseur 44 qui ne sera pas décrit ici plus en détail.

La face transversale 42 du plateau de pression 16 comporte une série de bossages 46 répartis angulairement de manière régulière et dont chacun s'étend axialement en saillie en direction du couvercle 12 pour constituer des appuis pour la zone périphérique externe 48 de la rondelle annulaire élastique 50 constituant la partie périphérique externe du diaphragme 14.

En effet, selon une conception connue, le diaphragme 14 comporte une partie annulaire périphérique extérieure 50, en forme de rondelle Belleville, qui est interposée élastiquement entre les bossages 46 du plateau de pression 16 et une nervure annulaire d'appui 52 qui s'étend en relief vers l'intérieur du couvercle 12 et sur laquelle prend appui la zone périphérique intérieure 54 de la rondelle Belleville, cette dernière étant prolongée radialement vers l'intérieur par une partie centrale fragmentée en doigts radiaux 55 par des fentes séparant deux à deux lesdits doigts.

La rondelle Belleville 14 a pour fonction de solliciter axialement le plateau de pression dans le sens correspondant au serrage axial du disque de friction 18 entre les faces de friction 32 et 40.

Le couvercle 12 de forme creuse est constitué pour l'essentiel par un voile annulaire 56 d'orientation générale transversale qui comporte au voisinage de son bord périphérique extérieur 58 des moyens 60 pour son attelage avec le plateau de pression 16, ces moyens d'attelage 60 permettant, selon une conception connue, un déplacement axial relatif du plateau de pression 16 par rapport au couvercle 12. Ils interviennent directement entre le plateau de pression 16 et le couvercle 12.

Les moyens d'attelage 60 consistent ici, de manière connue, en des languettes élastiques d'orientation tangentielle dont une extrémité est fixée par rivetage au bord périphérique extérieur 58 du voile 56, constituant le fond du couvercle 12, et dont l'autre extrémité est fixée au plateau de pression 16.

Ici la fixation est réalisée à l'aide de rivets, en variante elle peut être réalisée à l'aide de vis, de boulons ou tout autre organe de fixation. Le bord 58 est globalement d'orientation transversale. Ce bord est percé pour accès aux têtes des rivets de fixation des languettes 60 au plateau de pression 16. La face de friction 40 du plateau 16 présente localement des logements pour accès auxdits rivets.

Ainsi on fixe d'abord les languettes 60 au rebord 58, le diaphragme 14 étant déjà monté sur le couvercle 12, puis on fixe l'autre extrémité des languettes. On obtient ainsi un premier sous ensemble unitaire comprenant le plateau de pression 16, le diaphragme 14 et le couvercle 12.

On notera qu'ici l'embrayage est du type poussé, le diaphragme 14 étant monté de manière basculante sur le couvercle 12. Normalement le diaphragme 14 prend appui sur la nervure 52 portée par le voile (ou fond) 56 troué centralement du couvercle 12, formant un appui primaire pour le diaphragme 14, et sollicite, grâce aux bossages 46, le plateau de pression 16 en direction du plateau de réaction 20 pour serrage des garnitures de friction 36,38 entre les plateaux 16,20.

Ainsi le couple est transmis du vilebrequin, au moyen du disque de friction 18, à l'arbre d'entrée de la boîte de vitesses.

L'embrayage est ainsi engagé.

Pour désengager l'embrayage, on agit en poussant à l'aide d'une butée de débrayage non représentée sur l'extrémité interne des doigts 55 du diaphragme 14. Celui-ci bascule et prend appui alors sur son appui secondaire, décrit ci-après. Les languettes rappellent alors le plateau de pression 16 en direction du fond 56 du couvercle en sorte que les garnitures de friction 36,38 sont libérées. L'embrayage est alors désengagé.

Ici le diaphragme 14 est monté basculant sur le couvercle 12, de manière connue, à l'aide de pattes d'assemblage issues d'un seul tenant du voile 56 de celui-ci par découpe et pliage, le couvercle étant en tôle emboutie. Les pattes sont d'orientation axiale et traversent le diaphragme à la faveur d'orifices que celui-ci présente au niveau de la racine de ses doigts 55, c'est-à-dire à la périphérie interne 54 de sa rondelle Belleville 50. Ces orifices forment l'extrémité borgne élargie des fentes séparant les doigts 55. Au-delà du diaphragme les pattes, à leur extrémité libre, sont repliées radialement en direction opposée à l'axe de l'ensemble X-X pour formation d'un coude de calage pour une rondelle de support d'une couronne-jonc prenant appui sur l'autre face du diaphragme 14. Cette couronne-jonc, intercalée entre le diaphragme 14 et la rondelle de support, est de forme tronconique et présente à sa périphérie externe une forme arrondie pour contact avec le diaphragme 14 et formation d'un appui secondaire en vis-à-vis de l'appui primaire 52.

Bien entendu la présence de la rondelle de support n'est pas obligatoire. En variante les pattes d'assemblage peuvent être remplacées par des colonnettes dont la tête est profilée pour former un appui secondaire, lesdites colonnettes portant un jonc interposé entre le fond du couvercle et le diaphragme pour former l'appui primaire.

Bien entendu l'embrayage peut être du type tiré, la rondelle Belleville 50 s'appuyant alors à sa périphérie externe sur une nervure annulaire du couvercle 12 et à sa périphérie interne sur un bossage du plateau de pression 16. Dans ce cas, on agit, à l'aide de la butée de débrayage, en tirant sur l'extrémité interne des doigts 55 du diaphragme pour désengager l'embrayage.

De même le disque de friction peut ne comporter qu'une seule garniture de friction à l'intérieur de laquelle est noyé le disque 34. Cette garniture présente deux faces pour coopérer avec les faces de friction 32 et 40.

Le couvercle 12 comporte également des moyens de fixation 62 qui s'étendent axialement depuis son bord périphérique extérieur 58 en direction du plateau de réaction 20 et qui permettent la fixation du couvercle 12 sur le plateau 20 de manière à réaliser un module d'embrayage constituant un sous-ensemble pouvant être monté et fixé sur le flasque de support 22 par une série d'organes de fixation des vis de fixation 64 (figure 1) ou de rivets de fixation 164 (figure 4).

Les vis 64 ou les rivets 164 sont implantées radialement en dessous des moyens de fixation 62. A la figure 1 les vis sont portées par le plateau de réaction 20, leur tête étant montée dans un logement, en forme de lamage, réalisé dans la face de friction 32 du plateau de réaction 20. La tige filetée des vis 64 traverse le plateau 20 pour se visser dans un trou taraudé réalisé dans la couronne 30 du flasque 22. On notera que le flasque 22 présente localement des surépaisseurs pour formation des trous taraudés précités. En variante les vis 64 traversent la couronne 30 pour se visser dans un écrou de préférence solidaire de la couronne 30 par exemple par soudage.

Le couvercle 12, la rondelle Belleville 50 du diaphragme 14, le plateau de pression 16, les garnitures de friction 36,38 et le disque de support 34 sont percés et ce en coïncidence axiale pour formation de passages et accès aux têtes de vis par exemple à l'aide d'une visseuse pour visser ensemble les vis 64 et fixer le module 10 sur le flasque 24 et ce de manière automatique. Bien entendu les têtes des vis présentent des empreintes, par exemple elles sont à six pans creux, ou sont de forme polygonale pour coopérer avec la visseuse.

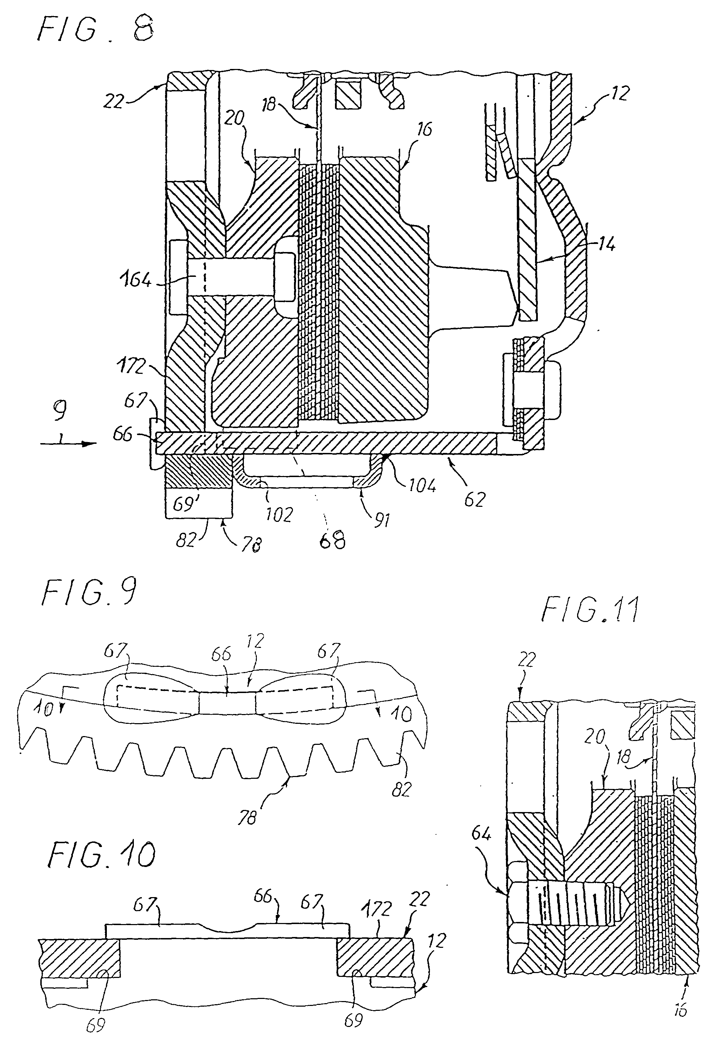

Bien entendu, de manière analogue à la figure 11, on peut inverser les structures, la partie filetée des vis 64 étant vissée dans le plateau de réaction 20 et la tête des vis en appui contre la face frontale du flasque 22. Néanmoins cela est moins favorable car les vis 64 risquent de se dévisser, le plateau de réaction 20 étant plus chaud que le flasque 22. En outre cela est moins favorable à un montage automatique.

Quoi qu'il en soit à la figure 1 comme à la figure 4 les garnitures de friction 36,38 ont une grande hauteur et peuvent venir au plus près des moyens de fixation 62.

Pour un encombrement radial donné du module 100, on obtient grâce aux moyens de fixation 62, une grande hauteur pour les garnitures de friction 36,38 ce qui permet à la figure 1 de réaliser les perçages précités pour accès aux têtes des vis de manière précitée, le diamètre des têtes des vis étant inférieur au moins à celui des perçages pratiqués dans les garnitures 36,38 et le disque 34 pour éviter que les vis 64 ne s'échappent.

Par ailleurs l'amortisseur 44 est à la figure 1 dans tous les cas intact et peut être du type standard et le couvercle est simplifié.

Dans toutes les figures les moyens de fixation 62 sont constitués par une série de pattes de fixation 66, d'orientation générale axiale qui s'étendent axialement depuis le bord périphérique 58 de la partie en forme de disque annulaire 56 du couvercle 12 en direction du plateau de réaction 20.

Les pattes 66, formant des tenons, sont par exemple réparties angulairement de manière uniforme à la périphérie du couvercle 12.

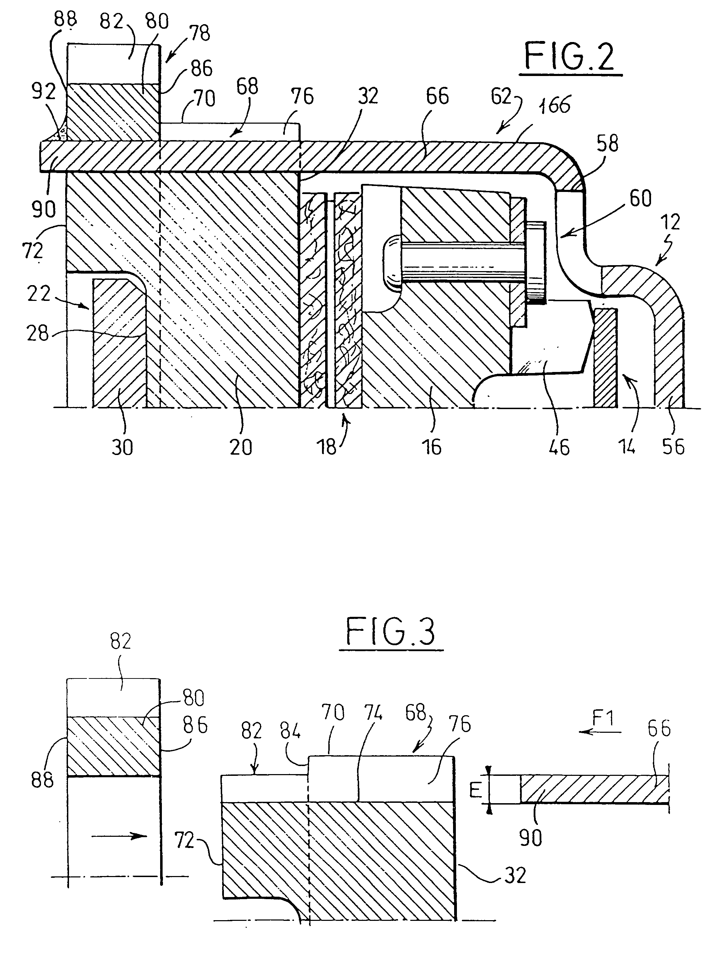

On décrira maintenant plus en détail, en se reportant aux figures 2 et 3, les moyens de fixation du couvercle 12 sur le plateau de réaction.

Chaque patte de fixation 66 est reçue, ici à jeu de montage, dans un passage 68 d'orientation axiale formé au voisinage de la surface périphérique externe 70, de forme générale cylindrique annulaire, du plateau de réaction 20. Les pattes 66 sont retenues axialement par rapport au plateau de réaction 20 en étant fixées sur celui-ci ou sur la couronne de démarreur 78 appartenant audit plateau.

Dans le mode de réalisation illustré aux figures 1 à 3, chaque passage 68, formant mortaise, est réalisé sous la forme d'une rainure axiale débouchante à ses deux extrémités, d'une part dans la face de friction 32, et d'autre part dans la face transversale annulaire d'extrémité 72 du plateau de réaction 20 la plus éloignée du disque de friction 18.

Chaque rainure 68 est délimitée radialement vers l'intérieur par un fond 74 et elle débouche radialement vers l'extérieur dans la surface périphérique externe 70.

La largeur de chaque rainure, délimitée par ses deux flancs parallèles 76, est légèrement supérieure à la largeur circonférentielle de la patte de fixation 66 de manière que cette dernière puisse être introduite aisément à jeu de montage axialement dans la rainure 68, de la droite vers la gauche selon la flèche F1 de la figure 3. Il est ainsi formé un assemblage du type tenons-mortaises.

Dans le mode de réalisation illustré sur les figures 1 à 3, le plateau de réaction 20 porte à sa périphérie une couronne de démarreur 78 de forme générale annulaire comportant un corps cylindrique annulaire et des dents 82.

Selon une conception connue, la couronne 78 est montée par frettage sur une portée cylindrique 82 usinée dans la surface périphérique externe 70 du plateau de réaction 20 et qui s'étend axialement depuis la face d'extrémité 72 jusqu'à un épaulement 84 déterminant la position axiale de la couronne de démarreur 78 par rapport au plateau de réaction 20. La surface externe 70 est donc étagée en diamètre et la couronne 72 solidaire du plateau de réaction 2 auquel elle appartient.

Dans cette position de montage dans laquelle une première face latérale 86 du corps 80 de la couronne de démarreur 78 est en appui contre l'épaulement 84, la face transversale opposée 88 de la couronne de démarreur 78 s'étend sensiblement dans le même plan vertical que la face d'extrémité axiale 72 du plateau de réaction 20.

La longueur de chaque patte de fixation 66 est telle que, en position introduite dans sa rainure 68, elle fasse saillie axialement, par son tronçon d'extrémité libre 90, au-delà de la face transversale d'extrémité axiale 72 du plateau de réaction 20 et au-delà de la face latérale 88 de la couronne de démarreur 78.

L'épaisseur radiale "E" de la patte de fixation 66 est légèrement inférieure à la distance radiale séparant le fond 74 de la rainure de la surface de portée cylindrique 82 de manière à pouvoir être introduite aisément en dessous de la couronne de démarreur, c'est-à-dire vers l'intérieur par rapport à cette dernière.

Selon le mode de réalisation représenté aux figures 1 et 2, la fixation de chaque patte 66 par rapport au plateau de réaction 20 est assurée au moyen d'une soudure 92 réalisée entre le tronçon d'extrémité libre 90 et la couronne de démarreur 78 métallique.

Plus précisément, le point de soudure entre le tronçon d'extrémité libre 90 et la portion en vis-à-vis de la face latérale 88 de la couronne de démarreur 78 permet d'immobiliser axialement la patte de fixation 66 par rapport au plateau de réaction 20 et d'immobiliser en rotation la couronne de démarreur 78 par rapport au plateau de réaction 20.

Selon une variante de réalisation, non représentée sur les figures, l'immobilisation axiale de chaque patte de fixation 66 par rapport au plateau de réaction 20 pourrait être assurée en rabattant radialement le tronçon d'extrémité libre 90 vers l'intérieur ou vers l'extérieur en regard de la face latérale 88 de la couronne de démarreur 78.

L'immobilisation peut également être réalisée en sertissant le tronçon d'extrémité libre 90 à la manière d'une tête de rivet ou par tout autre moyen équivalent par exemple du type des figures 8 à 10. Dans ces deux dernières variantes la couronne de démarreur est montée par frettage sur sa portée 82.

La conception des moyens de fixation 62 est particulièrement avantageuse en ce qu'elle permet de manière simple et efficace d'assurer la fixation du couvercle 12 sur le plateau de réaction 20 en amenant celui-ci axialement en vue d'introduire les pattes 66 dans les passages axiaux 68 puis de régler la position axiale relative du couvercle 12 par rapport au plateau de réaction 20 et enfin d'assurer la fixation finale par exemple par soudage.

Bien entendu, à la figure 1 comme à la figure 4, les pattes 66 peuvent être issues d'une jupe annulaire 166, d'orientation axiale, s'étendant à la périphérie externe du rebord périphérique externe 58 du fond 56 du couvercle 12.

Plus précisément les pattes 66 affectent l'extrémité libre de la jupe 166 qui a ainsi une forme de peigne annulaire.

Le nombre des pattes 66 et des rainures 68 dépend des applications.

Bien entendu la longueur des pattes 66 est fonction de la longueur des rainures 68.

On appréciera que ce dernier mode de réalisation à pattes 66 issues de la jupe 166 est préférable car le couvercle est plus rigide. En outre elle est nécessaire quand l'immobilisation axiale est réalisée par rabattement des pattes 66 ou par sertissage. Dans ce cas, il est formé un épaulement à la racine des pattes 66 c'est-à-dire à leur jonction avec la partie continue de la jupe 166.

Le couvercle est ainsi immobilisé axialement entre ledit épaulement, en contact alors avec la face 32 du plateau 20, et l'extrémité rabattue ou sertie des pattes 66 au contact de la face 72 ou de la face 88.

Dans la forme de réalisation des figures 1 à 3 ledit épaulement n'est pas forcément au contact de la face 72 car les pattes 66 sont fixées par soudage à la couronne métallique 78, c'est-à-dire immobilisées axialement dans les deux sens. Grâce à cette disposition on peut donc régler au départ l'inclinaison et/ou la position du diaphragme 14.

On appréciera que les pattes 66 sont en prise sur une grande longueur avec le plateau de réaction 20.

Bien entendu on peut régler la position de l'appui primaire 52 de manière précise par rapport au plateau de réaction. Les pattes 66 peuvent être épaulées pour venir en prise avec la face 32 du plateau de réaction.

On appréciera que le plateau de pression 16 est dépourvu de pattes saillantes pour la fixation des languettes. Ce plateau 16 est logé à l'intérieur du couvercle 12, tout comme le disque de friction 18.

On notera que la face radiale 72 du plateau de réaction, opposée à sa face radiale de friction 32, constitue la face d'extrémité axiale 72 du plateau de réaction.

En variante cette face d'extrémité axiale, la plus éloignée du disque de friction 18, peut consister en la face d'extrémité axiale 172 du flasque de support 22 et les pattes peuvent être retenues axialement par rapport au flasque de support 22 en étant fixées sur celui-ci ou sur la couronne de démarreur 78 appartenant à celui-ci.

Ainsi dans les figures 4 à 11 les passages d'orientation axiale 168 sont formés à la périphérie externe du flasque de support 22 pour s'étendre au-delà de la face d'extrémité axiale 172 du flasque de support 22, et le tronçon d'extrémité libre 90 de la patte de fixation 66, qui fait saillie, est retenu axialement par rapport au flasque de support 22.

Dans ces figures 4 à 11 la couronne de démarreur 78 est solidarisée par soudage 92 au flasque de support 22 en étant montée sur la surface périphérique 170 dudit flasque de support 22.

Plus précisément le module 10 de la figure 4 diffère de celui de la figure 1 par le fait que les passages 168 sont formés dans le flasque de support 22 et notamment par le fait que le plateau de pression 16, la rondelle Belleville 50 du diaphragme 14 et le couvercle 12 ne sont pas dotés de passages pour les organes de fixation du plateau de réaction 20 au flasque de support 22 consistant dans ce mode de réalisation en des rivets 164.

Ces rivets sont implantés radialement en dessous des moyens de fixation 62.

Bien entendu comme visible à la figure 11 les rivets 164 peuvent être remplacés par des vis 64 dont les tiges filetées traversent la couronne 30 du flasque 22 pour se visser dans un trou taraudé réalisé dans le plateau de réaction 20.

En variante les vis 64 peuvent traverser le plateau 20 pour se visser dans un écrou de préférence solidaire de la couronne 30 par exemple par soudage.

Dans cette figure 4 des trous sont réalisés dans l'amortisseur de torsion 44 ainsi qu'à travers les doigts 55 du diaphragme 14 et ce en coïncidence pour accès aux têtes des vis 26.

L'amortisseur de torsion est du type de celui décrit dans le document FR-A-2 710 377 ou dans la demande de brevet français FR-A-2 723 996.

Ainsi les rondelles et le voile de l'amortisseur principal du préamortisseur dudit amortisseur 44 sont dotés, radialement en dessous des organes élastiques accouplant élastiquement le voile aux rondelles de guidage, de trous et/ou échancrures en coïncidence selon un axe commun Y-Y permettant le passage d'un outil pour le montage du module d'embrayage sur le vilebrequin 11 par serrage des vis 26 solidarisant le flasque de support 22 au vilebrequin 11.

Les moyens de fixation 62 sont constitués par une série de pattes de fixation 66, d'orientation générale axiale qui comme à la figure 1 s'étendent axialement depuis le bord périphérique 58 de la partie en forme de disque annulaire 56 du couvercle 12 en direction du flasque de support 22.

Les pattes 66, formant des tenons, sont par exemple réparties angulairement de manière uniforme à la périphérie du couvercle 12.

Chaque patte de fixation 66 est reçue, ici à jeu de montage, dans un passage 168 d'orientation axiale formé au voisinage de la surface externe de la couronne annulaire périphérique 30 du flasque de support 22. Les passages 168 sont aisés à réaliser par exemple par découpage à la presse.

Dans le mode de réalisation illustré aux figures 4 à 7, chaque passage 168, formant mortaise, est réalisé sous la forme d'une rainure axiale débouchante à ses deux extrémités.

Chaque rainure 168 est délimitée radialement vers l'intérieur par un fond 174 et elle débouche radialement vers l'extérieur dans la surface périphérique externe 170 du flasque de support 22.

La largeur de chaque rainure, délimitée par ses deux flancs parallèles 176, est légèrement supérieure à la largeur circonférentielle de la patte de fixation 66 de manière que cette dernière puisse être introduite aisément à jeu de montage axialement dans la rainure 168, de la droite vers la gauche selon la figure 2. Il est ainsi formé un assemblage du type tenons-mortaises.

Dans ce mode de réalisation, le module d'embrayage 100 porte à sa périphérie une couronne de démarreur 78, ici métallique, de forme générale annulaire comportant un corps cylindrique annulaire et des dents 82.

La couronne de démarreur 78, selon une caractéristique, est montée sur la surface périphérique externe 170 du flasque de support 22.

Dans cette position de montage dans laquelle une première face transversale 86 du corps de la couronne de démarreur 78 est en appui contre une cible d'allumage 91 décrite ci-après, la face transversale opposée 88, la couronne de démarreur 78 s'étend sensiblement dans le même plan vertical que la face d'extrémité axiale 172 du flasque de support 22.

La longueur de chaque patte de fixation 66 est telle que, en position introduite dans sa rainure 168, elle fasse saillie axialement, par son tronçon d'extrémité libre, au-delà de la face transversale d'extrémité axiale 172 du flasque de support 22 et au-delà de la face latérale 88 de la couronne de démarreur 78.

L'épaisseur radiale de la patte de fixation 66 est légèrement inférieure à la distance radiale séparant le fond 174 du passage 168 de la surface périphérique externe 170 de manière à pouvoir être introduite aisément à jeu de montage en dessous de la couronne de démarreur 78, c'est-à-dire vers l'intérieur par rapport à cette dernière.

Selon le mode de réalisation représenté aux figures 4 à 7, la fixation de chaque patte 66 par rapport au flasque de support 22 est assurée au moyen d'une soudure 92 continue réalisée entre son tronçon d'extrémité libre 90 et la couronne de démarreur 78 métallique, laquelle soudure relie également la couronne de démarreur 78 au flasque de support 22. Ce mode de réalisation est particulièrement simple et conduit à une fixation robuste. En outre, la fixation est réalisable en une seule opération.

Plus précisément, le point de soudure entre le tronçon d'extrémité libre et la portion en vis-à-vis de la face latérale 88 de la couronne de démarreur 78 permet d'immobiliser axialement la patte de fixation 66 par rapport au flasque de support 22 et d'immobiliser en rotation la couronne de démarreur 78 par rapport au flasque de support 22.

Le module d'embrayage porte une cible constituée par une pièce rapportée ; plus précisément, ici la cible 91 est une pièce en tôle rapportée, solidarisée par soudage. La cible 91 comprend une partie médiane cylindrique 101 munie d'ouvertures 102 réparties circonférentiellement et reliée par des entretoises 103 au couvercle 12 par l'intermédiaire des pattes 66 de celui-ci qu'elle entoure ; les entretoises 103 sont ici en forme de joues pleines transversales ; en variante, les entretoises sont des pattes transversales réparties circonférentiellement ; comme on le voit sur les figures 1 et 2. La cible 91 est placée axialement contre la couronne de démarreur 78 en sorte que, pour sa solidarisation au couvercle 12, une soudure 104 est prévue seulement entre les pattes 66 et la joue 103 opposée à celle qui est en contact avec la couronne de démarreur 78.

Selon une variante de réalisation, non représentée sur les figures, l'immobilisation axiale de chaque patte de fixation 66 par rapport au flasque 22 et donc au plateau de réaction 20 pourrait être assurée en rabattant radialement le tronçon d'extrémité libre vers l'intérieur au contact de la face 172 du flasque 22 ou vers l'extérieur en regard de la face latérale 88 de la couronne de démarreur 78.

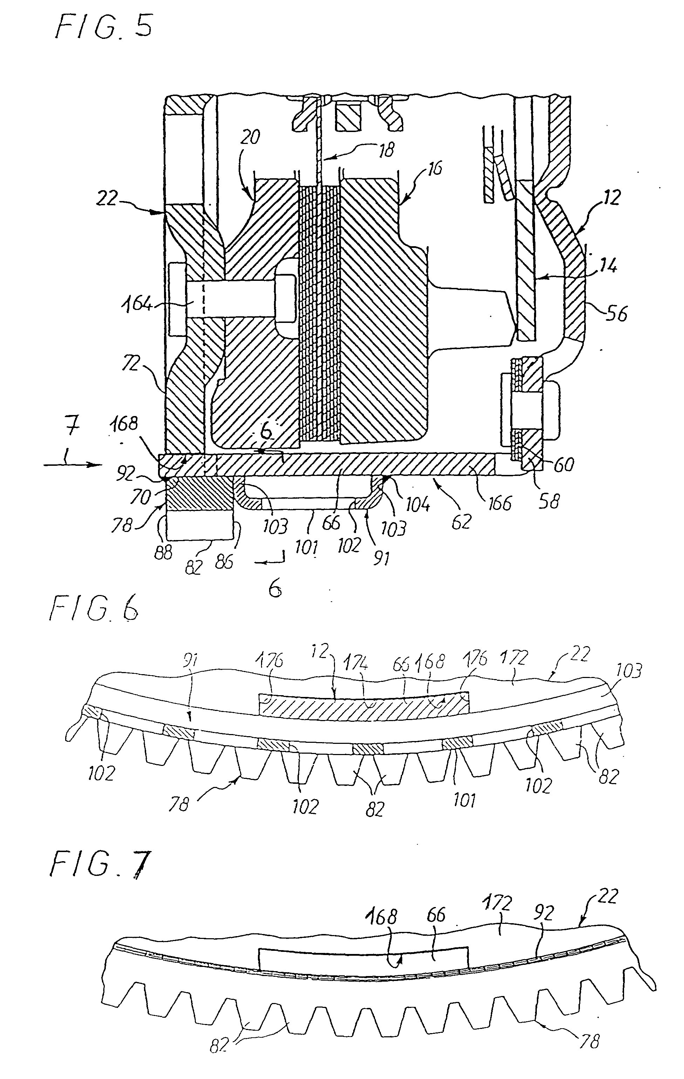

L'immobilisation peut également être réalisée en sertissant le tronçon d'extrémité libre à la manière d'une tête de rivet ou par tout autre moyen équivalent : c'est la variante représentée sur les figures 5 à 7 qui montrent des pattes 66 de chaque côté de celles-ci des têtes de maintien 67 au contact de la face 172 du flasque 22 ; l'immobilisation axiale est réalisée grâce à un épaulement 69 réalisé de chaque côté des pattes 66 et sur lequel prend appui le flasque de support 22.

Dans ces deux dernières variantes, la couronne de démarreur est soudée au flasque de support 22 en dehors des pattes 66.

La conception des moyens de fixation 62 est particulièrement avantageuse en ce qu'elle permet de manière simple et efficace d'assurer la fixation du couvercle 12 sur le flasque de support 22 en amenant celui-ci axialement en vue d'introduire les pattes 66 dans les passages axiaux 168 puis de régler la position axiale relative du couvercle 12 par rapport au flasque de support 22, donc par rapport au plateau de réaction 20, et enfin d'assurer la fixation finale par soudage de la couronne de démarreur 78.

Bien entendu, les pattes 66 peuvent être issues d'une jupe annulaire 166, d'orientation axiale (figure 5), s'étendant à la périphérie externe du rebord périphérique externe 58 du fond 56 du couvercle 12.

Plus précisément les pattes 66 affectent l'extrémité libre de la jupe 166 qui a ainsi une forme de peigne annulaire.

Le nombre des pattes 66 et des rainures 68 dépend des applications.

Bien entendu la longueur des pattes 66 est fonction de la longueur des rainures 168.

On appréciera que ce dernier mode de réalisation à pattes 66 issues de la jupe 166 est préférable car le couvercle est plus rigide. En outre, elle est nécessaire quand l'immobilisation axiale est réalisée par rabattement des pattes 66 ou par sertissage. Dans ce cas, il est formé un épaulement à la racine des pattes 66, c'est-à-dire à leur jonction avec la partie continue de la jupe 166. Le couvercle est ainsi immobilisé axialement entre ledit épaulement, en contact alors avec la face interne du flasque de support 22, et l'extrémité rabattue ou sertie des pattes 66 au contact de la face 172 ou de la face 88.

Dans la forme de réalisation des figures 4 à 7, ledit épaulement n'est pas forcément au contact de la face 172, car les pattes 66 sont fixées par soudage à la couronne métallique de démarreur 78, c'est-à-dire immobilisées axialement dans les deux sens. Grâce à cette disposition, on peut régler au départ l'inclinaison et/ou la position du diaphragme 14.

Bien entendu, on peut régler la position de l'appui primaire 52 de manière précise par rapport au flasque de support 22. Les pattes 66 peuvent être épaulées pour venir en prise avec la face interne du flasque de support 22.

On appréciera que le plateau de pression 16 est dépourvu de pattes saillantes pour la fixation des languettes 60. Ce plateau 16 est logé à l'intérieur du couvercle 12, tout comme le disque de friction 18.

Ainsi qu'il résulte à l'évidence de la description et des dessins le nombre d'ouvertures 102 de la cible d'allumage 91 dépend des applications et notamment du type du moteur essence ou Diesel. La cible 91 permet donc de standardiser le couvercle 1 2 et son contact avec la couronne de démarreur 78 permet de simplifier son montage tout en ayant une bonne résistance à la force centrifuge, ladite cible ne pouvant pas se déployer.

D'une manière générale, la fixation des pattes 66 avec le flasque 22 est fiable, d'encombrement réduit et permet d'obtenir une bonne liaison en rotation du couvercle 12 avec le flasque 22 permettant une bonne tenue de la soudure.

Le disque de friction peut venir au plus près des pattes 66, car les moyens de fixation selon l'invention sont décalés axialement par rapport audit disque.

Bien entendu la présente invention n'est pas limitée à l'exemple de réalisation décrit. En particulier dans le mode de réalisation des figures 4 à 11, il est envisageable que les pattes 66 traversent à jeu circonférentiel les passages 168.

On peut alors modifier le plateau de réaction 20 pour qu'il présente les passages 68, comme visibles en pointillés à la figure 8, du mode de réalisation des figures 3 à 6. Cela est possible car les pattes 66 sont suffisamment longues. Dans ce cas le couvercle 12 est lié de manière positive au plateau de réaction 20 par ses pattes 66, formant tenons, engagées dans les passages 68, formant mortaises du plateau de réaction 20.

Bien entendu les passages 68,168 sont axialement alignés pour être traversés par les pattes 66.

Le tronçon d'extrémité libre d'au moins certaines pattes de fixation 66, qui fait saillie axialement par rapport au flasque de support 22 étant retenu axialement par rapport au flasque de support 22, soit directement, soit indirectement par rapport à la couronne de démarreur appartenant au flasque de support 22 par soudage avec celui-ci. Les pattes sont donc fixées au flasque de support 22.

Dans ce cas la couronne de démarreur n'est pas frettée sur le plateau de réaction et appartient au flasque de support comme dans les figures 4 à 11.

Bien entendu la présence de la cible d'allumage 91 n'est pas indispensable.

En variante les pattes 66 peuvent être liées en rotation de manière positive au flasque de support 22 à la faveur de passages 168 de celui-ci et traverser à jeu circonférentiel les passages 66 du plateau de réaction.

En variante la couronne de démarreur 78 peut être soudée au plateau de réaction 20 et les pattes peuvent traverser à jeu de montage les passages 68 comme dans les figures 1 à 3 et à jeu circonférentiel les passages 168, le tronçon d'extrémité libre desdites pattes peut être par exemple soudé au flasque 22.

Bien entendu les pattes 66 peuvent traverser à jeu de montage les passages 68,168 alignés.

D'une manière générale les pattes 66 ne sont pas forcément toutes solidarisées à l'un des éléments plateau de réaction - flasque de support, sachant que la couronne de démarreur appartient à l'un desdits éléments. Certaines pattes peuvent être liées seulement en rotation de manière positive à l'un desdits éléments et constituer uniquement des pattes de blocage en rotation engagées dans les passages.

On peut prévoir par exemple une patte de blocage en rotation plus large, ainsi que son passage associé pour formation d'un détrompeur.

Les pattes 66 peuvent être emmanchées sans jeu dans les passages 68,168. Néanmoins on notera que cela est moins favorable pour régler la charge qu'exerce le diaphragme.

Il est préférable que les pattes 66 traversent à jeu de montage, comme indiqué ci-dessus, les passages 68,168.

## Revendications

1. Module d'embrayage (100) notamment pour véhicule automobile, du type comportant un ensemble de pièces adjacentes de forme générale annulaire et coaxiales parmi lesquelles sont agencés successivement un couvercle (12) doté à sa périphérie externe d'un bord périphérique (58) à partir duquel s'étendent axialement une série de pattes de fixation (66), un diaphragme (14), un plateau de pression (16) lié directement en rotation au couvercle (12) par des moyens d'attelage (60) permettant un déplacement axial du plateau de pression (16) par rapport au couvercle (12), un disque de friction (18) propre à être relié à un arbre mené et un plateau de réaction (20), d'une part, fixé au couvercle (12) par des moyens de fixation (62) agencés à la périphérie externe du module (10), et, d'autre part, monté sur un flasque (22) de support, solidaire en rotation d'un arbre menant, au moyen d'une série d'organes de fixation (64) agencés radialement vers l'intérieur par rapport auxdits moyens de fixation (62), ledit module comportant à sa périphérie externe une couronne de démarreur (78) portée par l'un des éléments flasque de support (22) - plateau de réaction (20), dans lequel des pattes de fixation (66) traversant chacune axialement un passage correspondant (68, 168) sous la forme d'une rainure d'orientation axiale formée dans la surface de la périphérie externe (70, 170) de l'un des éléments flasque de support (22) - plateau de réaction (20) et ouverte radialement vers l'extérieur caractérisé en ce que les pattes de fixation (66) s'étendent axialement au-delà (90) de la face d'extrémité axiale (72, 172) dudit élément la plus éloignée du disque de friction (18), en ce que le tronçon d'extrémité libre (90) de la patte de fixation (66), qui fait saillie, est retenu axialement par rapport à l'un des éléments flasque de support (22) - plateau de réaction (20) et en ce que chaque passage (68, 168) est agencé radialement vers l'intérieur par rapport à la couronne de démarreur (78).

2. Module d'embrayage selon la revendication 1, caractérisé en ce que les pattes de fixation (66) sont issues d'une jupe annulaire (166) d'orientation axiale que présente le couvercle (12) à sa périphérie externe.

3. Module d'embrayage selon la revendication 1 ou 2, caractérisé en ce que les pattes de fixation (66) traversent à jeu de montage les passages (68, 168).

4. Module d'embrayage selon l'une quelconque des revendications 1 à 3, caractérisé en ce que le tronçon d'extrémité libre est soudé.

5. Module d'embrayage selon l'une quelconque des revendications 1 à 3, caractérisé en ce que le tronçon d'extrémité libre est rabattu radialement.

6. Module d'embrayage selon la revendication 5, caractérisé en ce que le tronçon d'extrémité libre est rabattu radialement en regard d'une face transversale en vis-à-vis (88) de la couronne de démarreur (78).

7. Module d'embrayage selon l'une quelconque des revendications 1 à 3, caractérisé en ce que le tronçon d'extrémité libre (90) est serti.

8. Module d'embrayage selon l'une quelconque des revendications 1 à 4, caractérisé en ce que le tronçon d'extrémité libre est soudé à la couronne de démarreur (78) .

9. Module d'embrayage selon l'une quelconque des revendications 1 à 8, caractérisé en ce que les pattes de fixation (66) traversent chacun un dit passage (68) correspondant sous forme d'une rainure d'orientation axiale formée dans la périphérie externe du plateau de réaction (20) pour s'étendre au-delà de la face d'extrémité axiale (72) du plateau de réaction (20) la plus éloignée du disque de friction (18).

10. Module d'embrayage selon la revendication 9, caractérisé en ce que le tronçon d'extrémité libre (90) de certaines au moins des pattes de fixation (66), qui fait saillie, est retenu axialement par rapport au plateau de réaction (20).

11. Module d'embrayage selon la revendication 9 ou 10, caractérisé en ce que le plateau de réaction (20) porte à sa périphérie externe (70) une couronne de démarreur (78), et en ce que chaque passage (68) est agencé radialement vers l'intérieur par rapport à la couronne de démarreur (78).

12. Module d'embrayage selon la revendication 11, caractérisé en ce que la couronne de démarreur (78) est montée sur une portée (82) usinée dans la surface périphérique externe (70) du plateau de réaction (20) dont la profondeur radiale est inférieure à celle de la rainure axiale (68, 74).

13. Module d'embrayage (10) selon l'une quelconque des revendications 1 à 8, caractérisé par le fait que chacune des parties de fixation du couvercle traverse axialement un dit passage (168) d'orientation axiale sous forme d'une rainure axiale formée dans la périphérie externe (170) du flasque de support (22), pour s'étendre axialement au-delà de la face d'extrémité axiale (72) du flasque de support (22), et en ce que le tronçon d'extrémité libre de la patte de fixation (66) qui fait saillie, est retenu axialement par rapport au flasque de support (22).

14. Module d'embrayage selon la revendication 13, caractérisé en ce que les pattes de fixation (66) traversent chacune axialement une rainure axiale (68) formée dans la surface périphérique externe (70) du plateau de réaction (20) et qui est ouverte radialement vers l'extérieur et en ce que les rainures (68, 168) du flasque de support (22) et du plateau de réaction (20) sont axialement alignées pour être traversées par les pattes de fixation (66).

15. Module d'embrayage selon la revendication 13 ou 14, caractérisé en ce que la couronne de démarreur (78) est solidarisée par soudage (92) au flasque de support (22) en étant montée sur la surface périphérique externe (70) dudit flasque de support (22).

16. Module d'embrayage selon l'une quelconque des revendications 13 à 15, caractérisé par le fait que le tronçon d'extrémité libre est soudé (92) au flasque de support (22).

17. Module d'embrayage selon l'une quelconque des revendication 13 à 15, caractérisé par le fait que le tronçon d'extrémité libre (92) est soudé à la couronne de démarreur (78).

18. Module d'embrayage selon l'une quelconque des revendications 13, 14, 16, caractérisé en ce que la couronne de démarreur (78) est montée sur le plateau de réaction (20).

19. Module d'embrayage selon l'une quelconque des revendications 1 à 19, caractérisé en ce que au moins une patte (66) et un passage (68, 168) ont une taille différente et/ou au moins une patte (66) et un passage (68, 168) sont répartis de manière non régulière pour formation d'un détrompeur.

## Claims

1. Clutch module (100) notably for a motor vehicle, of the type having a set of adjacent parts which are generally annular in shape and coaxial, amongst which there are arranged successively a cover (12) provided at its external periphery with a peripheral edge (58) from which a series of fixing lugs (66) extend axially, a diaphragm (14), a pressure plate (16) connected directly with respect to rotation to the cover (12) by coupling means (60) allowing axial movement of the pressure plate (16) with respect to the cover (12), a friction disc (18) able to be connected to a driven shaft and a reaction plate (20), on the one hand fixed to the cover (12) by fixing means (62) arranged at the external periphery of the module (10) and on the other hand mounted on a support plate (22), fixed with respect to rotation to a driving shaft, by means of a series of fixing members (64) arranged radially towards the inside with respect to the said fixing means (62), the said module having at its external periphery a starter ring (78) carried by one of the elements consisting of support plate (22) and reaction plate (20), in which fixing lugs (66) each passing axially through a corresponding passage (68, 168) in the form of an axially oriented groove formed in the surface of the external periphery (70, 170) of one of the elements consisting of support plate (22) and reaction plate (20) and open radially towards the outside, characterised in that the fixing lugs (66) extend axially beyond (90) the axial end face (72, 172) of the said element furthest away from the friction disc (18), in that the free end portion (90) of the fixing lug (66), which projects, is held axially with respect to one of the elements consisting of support plate (22) and reaction plate (20), and in that each passage (68, 168) is arranged radially towards the inside with respect to the starter ring (78).

2. Clutch module according to Claim 1, characterised in that the fixing lugs (66) issue from an axially oriented annular skirt (166) which the cover (12) has at its external periphery.

3. Clutch module according to Claim 1 or 2, characterised in that the fixing lugs (66) pass through the passages (68, 168) with mounting clearance.

4. Clutch module according to any one of Claims 1 to 3, characterised in that the free end portion is welded.

5. Clutch module according to any one of Claims 1 to 3, characterised in that the free end portion is folded back radially.

6. Clutch module according to Claim 5, characterised in that the free end portion is folded back radially opposite a facing transverse face (88) of the starter ring (78).

7. Clutch module according to any one of Claims 1 to 3, characterised in that the free end portion (90) is crimped.

8. Clutch module according to any one of Claims 1 to 4, characterised in that the free end portion is welded to the starter ring (78).

9. Clutch module according to any one of Claims 1 to 8, characterised in that the fixing lugs (66) each pass through a said corresponding passage (68) in the form of an axially oriented groove formed in the external periphery of the reaction plate (20) in order to extend beyond the axial end face (72) of the reaction plate (20) furthest away from the friction disc (18).

10. Clutch module according to Claim 9, characterised in that the free end portion (90) of at least some of the fixing lugs (66), which project, is held axially with respect to the reaction plate (20).

11. Clutch module according to Claim 9 or 10, characterised in that the reaction plate (20) carries a starter ring (78) at its external periphery (70), and in that each passage (68) is arranged radially towards the inside with respect to the starter ring (78).

12. Clutch module according to Claim 11, characterised in that the starter ring (78) is mounted on a surface (82) machined in the external peripheral surface (70) of the reaction plate (20) whose radial depth is less than that of the axial groove (68, 74).

13. Clutch module (10) according to any one of Claims 1 to 8, characterised by the fact that each of the cover fixing parts passes axially through a said axially oriented passage (168) in the form of an axial groove formed in the external periphery (170) of the support plate (22), in order to extend axially beyond the axial end face (72) of the support plate (22), and in that the free end portion of the fixing lug (66) which projects is held axially with respect to the support plate (22).

14. Clutch module according to Claim 13, characterised in that the fixing lugs (66) each pass axially through an axial groove (68) formed in the external peripheral surface (70) of the reaction plate (20) and which is open radially towards the outside and in that the grooves (68, 168) in the support plate (22) and reaction plate (20) are axially aligned in order to have the fixing lugs (66) pass through them.

15. Clutch module according to Claim 13 or 14, characterised in that the starter ring (78) is fixed by welding (92) to the support plate (22) whilst being mounted on the external peripheral surface (70) of the said support plate (22).

16. Clutch module according to any one of Claims 13 to 15, characterised by the fact that the free end portion is welded (92) to the support plate (22).

17. Clutch module according to any one of Claims 13 to 15, characterised by the fact that the free end portion (92) is welded to the starter ring (78).

18. Clutch module according to any one of Claims 13, 14, 16, characterised in that the starter ring (78) is mounted on the reaction plate (20).

19. Clutch module according to any one of Claims 1 to 19, characterised in that at least one lug (66) and one passage (68, 168) have a different size and/or at least one lug (66) and one passage (68, 168) are distributed in a non-regular manner to form a locating device.

## Patentansprüche

1. Kupplungsmodul (100), insbesondere für Kraftfahrzeuge, umfassend eine Baugruppe von nebeneinander angeordneten insgesamt ringförmigen und koaxialen Teilen, unter denen hintereinander ein Deckel (12), der an seinem äußeren Umfang mit einem Umfangsrand (58) versehen ist, von dem aus sich eine Reihe von Befestigungsansätzen (66) axial erstrecken, eine Membranfeder (14), eine Druckplatte (16), die mit dem Deckel (12) durch Verbindungsmittel (60) direkt drehfest verbunden ist, die eine axiale Verschiebung der Druckplatte (16) im Verhältnis zum Deckel (12) ermöglichen, eine mit einer getriebenen Welle verbindbare Kupplungsscheibe (18) und eine Gegenanpreßplatte (20) angeordnet sind, die einerseits am Deckel (12) durch am äußeren Umfang des Moduls (10) angeordnete Befestigungsmittel (62) befestigt ist und andererseits an einem drehfest mit einer treibenden Welle verbundenen Trägerflansch (22) mittels einer Reihe von im Verhältnis zu den besagten Befestigungsmitteln (62) radial nach innen angeordneten Befestigungsorganen (64) angebracht ist, wobei das besagte Modul an seinem äußeren Umfang einen an einem der Elemente Trägerflansch (22) - Gegenanpreßplatte (20) angebrachten Anlasserzahnkranz (78) umfaßt, wobei Befestigungsansätze (66) jeweils axial durch einen entsprechenden Durchgang (68, 168) in Form einer axial ausgerichteten Nut hindurchgehen, die in der äußeren Umfangsfläche (70, 170) eines der Elemente Trägerflansch (22) - Gegenanpreßplatte (20) ausgebildet und radial nach außen offen ist, **dadurch gekennzeichnet,** daß sich die Befestigungsansätze (66) axial jenseits (90) der am weitesten von der Kupplungsscheibe (18) entfernten axialen Abschlußfläche (72, 172) des besagten Elements erstrecken, daß das vorstehende freie Endteilstück (90) des Befestigungsansatzes (66) im Verhältnis zu einem der Elemente Trägerflansch (22) - Gegenanpreßplatte (20) axial gehalten wird und daß jeder Durchgang (68, 168) im Verhältnis zum Anlasserzahnkranz (78) radial nach innen angeordnet ist.

2. Kupplungsmodul nach Anspruch 1, **dadurch gekennzeichnet**, daß die Befestigungsansätze (66) aus einer axial ausgerichteten ringförmigen Einfassung (166) herausgearbeitet sind, die der Deckel (12) an seinem äußeren Umfang aufweist.

3. Kupplungsmodul nach Anspruch 1 oder 2, **dadurch gekennzeichnet**, daß die Befestigungsansätze (66) mit Einbauspiel durch die Durchgänge (68, 168) hindurchgehen.

4. Kupplungsmodul nach einem der Ansprüche 1 bis 3, **dadurch gekennzeichnet**, daß das freie Endteilstück angeschweißt ist.

5. Kupplungsmodul nach einem der Ansprüche 1 bis 3, **dadurch gekennzeichnet**, daß das freie Endteilstück radial umgebogen ist.

6. Kupplungsmodul nach Anspruch 5, **dadurch gekennzeichnet**, daß das freie Endteilstück gegenüber einer gegenüberliegenden Querfläche (88) des Anlasserzahnkranzes (78) radial umgebogen ist.

7. Kupplungsmodul nach einem der Ansprüche 1 bis 3, **dadurch gekennzeichnet**, daß das freie Endteilstück (90) aufgefalzt ist.

8. Kupplungsmodul nach einem der Ansprüche 1 bis 4, **dadurch gekennzeichnet**, daß das freie Endteilstück (90) am Anlasserzahnkranz (78) angeschweißt ist.

9. Kupplungsmodul nach einem der Ansprüche 1 bis 8, **dadurch gekennzeichnet**, daß die Befestigungsansätze (66) jeweils durch einen sogenannten entsprechenden Durchgang (68) in Form einer in den äußeren Umfang der Gegenanpreßplatte (20) eingearbeiteten axial ausgerichteten Nut hindurchgehen, um sich jenseits der am weitesten von der Kupplungsscheibe (18) entfernten axialen Abschlußfläche (72) der Gegenanpreßplatte (20) zu erstrecken.

10. Kupplungsmodul nach Anspruch 9, **dadurch gekennzeichnet**, daß das vorstehende freie Endteilstück (90) wenigstens bestimmter Befestigungsansätze (66) im Verhältnis zur Gegenanpreßplatte (20) axial gehalten wird.

11. Kupplungsmodul nach Anspruch 9 oder 10, **dadurch gekennzeichnet**, daß die Gegenanpreßplatte (20) an ihrem äußeren Umfang (70) einen Anlasserzahnkranz (78) trägt und daß jeder Durchgang (68) im Verhältnis zum Anlasserzahnkranz (78) radial nach innen angeordnet ist.

12. Kupplungsmodul nach Anspruch 11, **dadurch gekennzeichnet**, daß der Anlasserzahnkranz (78) auf einer in die äußere Umfangsfläche (70) der Gegenanpreßplatte (20) eingearbeiteten Sitzfläche (82) angebracht ist, deren radiale Tiefe kleiner als die der axialen Nut (68, 74) ist.

13. Kupplungsmodul (10) nach einem der Ansprüche 1 bis 8, **dadurch gekennzeichnet**, daß jeder der Befestigungsteile des Deckels axial durch einen sogenannten axial ausgerichteten Durchgang (168) in Form einer in den äußeren Umfang (170) des Trägerflansches (22) eingearbeiteten axialen Nut hindurchgeht, um sich axial jenseits der axialen Abschlußfläche (72) des Trägerflansches (22) zu erstrecken, und daß das vorstehende freie Endteilstück des Befestigungsansatzes im Verhältnis zum Trägerflansch (22) axial gehalten wird.

14. Kupplungsmodul nach Anspruch 13, **dadurch gekennzeichnet**, daß die Befestigungsansätze (66) jeweils axial durch eine in die äußere Umfangsfläche (70) der Gegenanpreßplatte (20) eingearbeitete axiale Nut (68) hindurchgehen, die radial nach außen offen ist, und daß die Nuten (68, 168) des Trägerflansches (22) und der Gegenanpreßplatte (20) axial aufeinander ausgerichtet sind, um den Durchgang der Befestigungsansätze (66) zu ermöglichen.

15. Kupplungsmodul nach Anspruch 13 oder 14, **dadurch gekennzeichnet**, daß der Anlasserzahnkranz (78) durch Schweißen (92) fest mit dem Trägerflansch (22) verbunden ist, wobei er auf der äußeren Umfangsfläche (70) des besagten Trägerflansches (22) angebracht ist.

16. Kupplungsmodul nach einem der Ansprüche 13 bis 15, **dadurch gekennzeichnet**, daß das freie Endteilstück am Trägerflansch (22) angeschweißt (92) ist.

17. Kupplungsmodul nach einem der Ansprüche 13 bis 15, **dadurch gekennzeichnet**, daß das freie Endstück (92) am Anlasserzahnkranz (78) angeschweißt ist.

18. Kupplungsmodul nach einem der Ansprüche 13, 14, 16, **dadurch gekennzeichnet**, daß der Anlasserzahnkranz (78) an der Gegenanpreßplatte (20) angebracht ist.

19. Kupplungsmodul nach einem der Ansprüche 1 bis 18, **dadurch gekennzeichnet**, daß wenigstens ein Ansatz (66) und ein Durchgang (68, 168) eine unterschiedliche Größe aufweisen und/oder wenigstens ein Ansatz (66) und ein Durchgang (68, 168) nicht gleichmäßig verteilt sind, um eine Einbaumarkierung zu bilden.
